# FASCICULE DE BREVET EUROPEEN

(11) **EP 0 623 302 B1**
(45) Date de publication et mention de la délivrance du brevet: **13.03.1996**
(21) Numéro de dépôt: 94106473.5
(22) Date de dépôt: 26.04.1994
(51) Int. Cl.: A47J 31/06, A47J 31/52

(54) **Dispositif de verrouillage d'un porte-filtre sur une tête d'infusion de cafetière express**
Vorrichtung zum Verriegeln eines Filterbehälters am Infusionskopf einer Espresso Kaffeemaschine
Device for locking a filter holder on an infusion head of an expresso coffee machine

(30) Priorité: 29.04.1993 FR 9305107
(43) Date de publication de la demande: 09.11.1994
(73) Titulaire: MOULINEX S.A., F-93170 Bagnolet (FR)
(72) Inventeur: Landais, Joel, F-61250 Conde sur Sarthe (FR)
(74) Mandataire: May, Hans Ulrich, Dr.

(56) Documents cités:
- EP-A- 0 280 594
- EP-A- 0 313 496
- DE-C- 3 736 517

## Description

La présente invention se rapporte à un dispositif de verrouillage d'un porte-filtre sur une tête d'infusion de cafetière de type express équipée d'une rampe de verrouillage et adaptée à recevoir de façon étanche le porte-filtre qui comporte à cet effet des moyens de fixation à ladite tête, de manière que ledit porte-filtre puisse être engagé dans la tête et être amené par un mouvement de rotation d'une position libre à une position verrouillée.

Un tel dispositif de verrouillage de porte-filtre est connu du document EP-A-280 594.

Un des problèmes généralement rencontré par l'utilisateur de cafetières comportant un tel porte-filtre est de mettre correctement en place cette pièce avant de faire fonctionner la cafetière.

Si le porte-filtre n'est pas bien verrouillé, l'étanchéité entre le filtre et la tête d'infusion est imparfaite et la pression nécessaire à l'obtention d'un café express ne peut pas être atteinte.

D'un autre côté, lorsque l'utilisateur met en place le porte-filtre avec trop de force, il risque de fatiguer prématurément les éléments d'étanchéité.

Le but de la présente invention est de permettre à l'utilisateur de constater la mise en place correcte du porte-filtre.

Selon l'invention, le dispositif de verrouillage comprend des moyens de signalisation permettant d'indiquer, lors du passage du porte-filtre de sa position libre à sa position verrouillée, le moment précis où le porte-filtre atteint sa position verrouillée de manière à obtenir un verrouillage correct de celui-ci.

Ainsi, l'utilisateur est informé du positionnement correct du porte-filtre. D'autres caractéristiques préférentielles sont contenues dans les revendications dépendantes
Les caractéristiques et avantages de l'invention ressortiront d'ailleurs de la description qui va suivre, prise à titre d'exemple non limitatif, en référence aux dessins annexés dans lesquels :
- la figure 1 est une vue en perspective de la tête et du porte-filtre illustrant un dispositif de verrouillage selon l'invention.
- la figure 2 est une vue en développement linéaire et en coupe partielle d'un détail de réalisation du dispositif de verrouillage de l'invention.
- la figure 3 est une vue en développement linéaire et en coupe partielle d'un détail de réalisation d'une variante du dispositif de verrouillage selon l'invention.

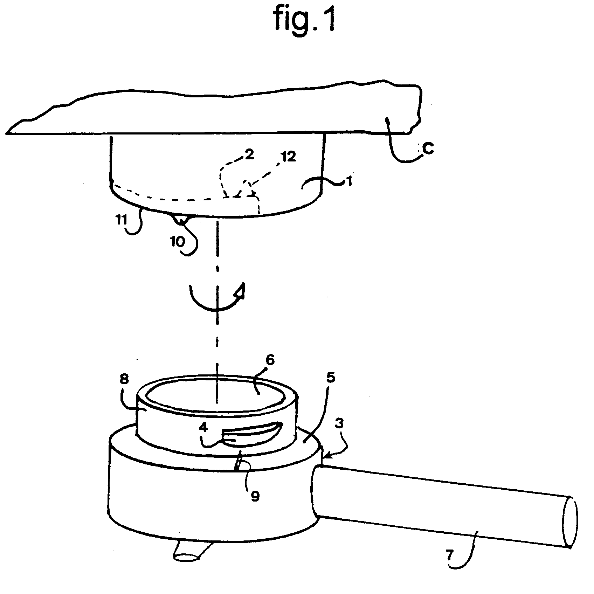

La figure 1 illustre le dispositif de verrouillage d'un porte-filtre sur une tête d'infusion 1 de cafetière de type express équipée d'une rampe de verrouillage 2 et adaptée à recevoir le porte-filtre 3 qui comporte à cet effet des moyens de fixation 4 à ladite tête 1, de manière que ledit porte filtre 3 puisse être engagé dans la tête 1 et être amené, par un mouvement de rotation, d'une position libre à une position verrouillée.

Le porte-filtre comprend une enveloppe 5 entourant une chambre d'infusion 6 muni d'un filtre destiné à contenir de la mouture de café. Il comporte en outre une poignée 7 de manière à faciliter sa préhension.

L'utilisateur emplit le filtre de mouture et fixe le porte-filtre 3 à la tête d'infusion 1 de la cafetière C en introduisant la partie supérieure 8 du porte filtre 3 dans la tête 1 et en imprimant au porte-filtre 3 un mouvement de rotation au moyen de la poignée 7 de manière à le verrouiller. A cet effet les moyens de fixation 4 du porte-filtre 3 sont constitués par deux ergots diamétralement opposés s'engageant sur la rampe 2.

Selon l'invention le dispositif de verrouillage comprend des moyens de signalisation du passage de la position libre à la position verrouillée. Grâce à ces moyens l'utilisateur sait quand le porte-filtre est en position verrouillée et évite de le serrer exagérément sur la rampe.

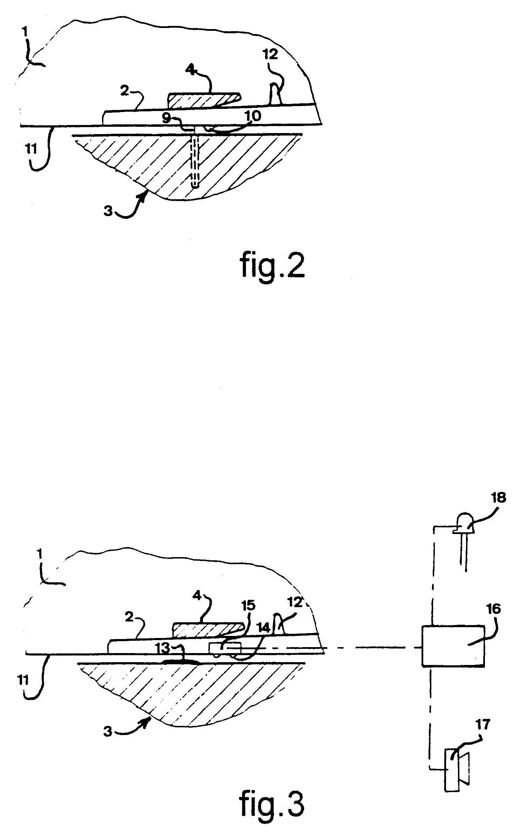

Dans une première variante les moyens de signalisation sont sonores. Selon les figures 1 et 2, les moyens de signalisation sonore comportent une lamelle flexible 9 et un bossage 10 coopérant avec ladite lamelle 9 de manière à fléchir la lamelle 9 et la détendre brusquement lorsque le porte-filtre atteint la position verrouillée. La lamelle 9 émet alors un bruit sec. Lorsque l'on applique un mouvement de rotation inverse au porte-filtre de manière à le détacher de la rampe; la lamelle flexible 9 est également actionnée par le bossage 10 et émet un nouveau bruit indiquant le déverrouillage.

De préférence, la lamelle flexible est solidaire du porte-filtre 3 et présente une extrémité encastrée et une extrémité libre saillante, tandis que le bossage 10 est pratiqué dans la tête d'infusion 1.

Comme on peut le voir aussi sur la figure 2, lors du verrouillage du porte-filtre 3, la lamelle 9 effleure la partie inférieure 11 de tête d'infusion et est actionnée par le bossage 10.

Il est bien évident que dans une réalisation équivalente la lamelle flexible pourrait être solidaire de la tête d'infusion et le bossage pratiqué sur le porte-filtre.

La rampe 2 comporte également une butée 12 contre laquelle viennent s'appuyer les ergots du porte-filtre 3 lorsque l'utilisateur ignore le signal sonore. La position relative de la lamelle 9 sur le porte-filtre 3 et du bossage 10 sur la tête d'infusion 1 est telle que la lamelle 9 émette un bruit juste avant que les ergots ne viennent en butée.

Avantageusement, la lamelle flexible 9 est réalisée en polyester.

Selon des versions plus sophistiquées de l'invention, les moyens de signalisation comportent un interrupteur 15 coopérant avec le porte-filtre 3 et adapté à commander le fonctionnement d'un dispositif du type électroacoustique ou optoélectronique.

Comme on peut le voir dans la variante illustrée à la figure 3, le porte filtre 3 comprend une petite éminence conductrice 13 adaptée à relier électriquement des contacts 14 de l'interrupteur 15 logé dans la rampe 2, lorsque le porte-filtre 3 atteint la position verrouillée. Les contacts 14 sont électriquement reliés à une interface électronique 16 comprenant selon le cas un générateur d'une tonalité brève reproduite par une membrane acoustique 17, ou encore une diode 18 de type D.E.L., rouge de préférence.

Quelle que soit la forme de réalisation de l'invention, mécanique ou électronique, elle permet à l'utilisateur de se rendre toujours compte de la mise en place correcte et du verrouillage du porte-filtre et confère ainsi à la cafetière un usage particulièrement commode.

## Revendications

1. Dispositif de verrouillage d'un porte-filtre sur une tête d'infusion (1) de cafetière de type express équipée d'une rampe de verrouillage (2) et adaptée à recevoir de façon étanche le porte-filtre (3) qui comporte à cet effet des moyens de fixation (4) à ladite tête (1), de manière que ledit porte-filtre (3) puisse être engagé dans la tête et être amené, par un mouvement de rotation, d'une position libre à une position verrouillée,
**caractérisé en ce qu'**il comprend des moyens de signalisation permettant d'indiquer, lors du passage du porte-filtre (3) de sa position libre à sa position verrouillée, le moment précis où le porte-filtre (3) atteint sa position verrouillée de manière à obtenir un verrouillage correct de celui-ci.

2. Dispositif de verrouillage selon la revendication 1,
**caractérisé en ce que** les moyens de signalisation sont sonores.

3. Dispositif de verrouillage selon la revendication 2,
**caractérisé en ce que** les moyens de signalisation sonore comportent une lamelle flexible (9) et un bossage (10) coopérant avec ladite lamelle (9) de manière à fléchir la lamelle (9) et la détendre brusquement lorsque le porte-filtre (3) atteint la position verrouillée.

4. Dispositif de verrouillage selon la revendication 3,
**caractérisé en ce que** la lamelle flexible (9) est solidaire du porte-filtre (3) et le bossage (10) est pratiqué dans la tête d'infusion (1).

5. Dispositif de verrouillage selon la revendication 3,
**caractérisé en ce que** la lamelle flexible (9) est solidaire de la tête d'infusion (1) et le bossage (10) est pratiqué sur le porte-filtre (3).

6. Dispositif de verrouillage selon l'une des revendications 3 à 5,
caractérisé en ce que la lamelle flexible (9) est une lamelle en polyester.

7. Dispositif de verrouillage selon la revendication 2,
caractérisé en ce que les moyens de signalisation comportent un interrupteur (15) coopérant avec le porte-filtre (3) et adapté à commander le fonctionnement d'un dispositif électroacoustique (16,17).

8. Dispositif de verrouillage selon la revendication 1,
caractérisé en ce que les moyens de signalisation sont visuels.

9. Dispositif de verrouillage selon la revendication 8,
caractérisé en ce que les moyens de signalisation comportent un interrupteur (15) coopérant avec le porte-filtre (3) et adapté à commander le fonctionnement d'un dispositif optoélectronique de visualisation (16,18).

10. Dispositif de verrouillage selon la revendication 9,
caractérisé en ce que le dispositif optoélectronique comporte une diode électroluminescente (18).

## Claims

1. Device for locking a filter holder on the infusion head (1) of a cafetiere of the espresso type equipped with a locking slope (2) and adapted for sealingly receiving the filter holder (3) which for this purpose includes means (4) of fixing to the said head (1), so that the said filter holder (3) can be engaged in the head and be brought, by a rotation movement, from a free position to a locked position, characterised in that it comprises indication means for indicating, when the filter holder (3) moves from its free position to its locked position, the precise moment when the filter holder (3) reaches its locked position so as to obtain correct locking thereof.

2. Locking device according to Claim 1, characterised in that the indication means are audible.

3. Locking device according to Claim 2, characterised in that the audible indication means include a flexible blade (9) and a projection (10) cooperating with the said blade (9) so as to flex the blade (9) and release it abruptly when the filter holder (3) reaches the locked position.

4. Locking device according to Claim 3, characterised in that the flexible blade (9) is fixed to the filter holder (3) and the protrusion (10) is formed in the infusion head (1).

5. Locking device according to Claim 3, characterised in that the flexible blade (9) is fixed to the infusion head (1) and the protrusion (10) is formed on the filter holder (3).

6. Locking device according to one of Claims 3 to 5, characterised in that the flexible blade (9) is a polyester blade.

7. Locking device according to Claim 2, characterised in that the indication means include a switch (15) cooperating with the filter holder (3) and adapted for controlling the operation of an electroacoustic device (16, 17).

8. Locking device according to Claim 1, characterised in that the indication means are visual.

9. Locking device according to Claim 8, characterised in that the indication means include a switch (15) cooperating with the filter holder (3) and adapted for controlling the operation of an optoelectronic display device (16, 18).

10. Locking device according to Claim 9, characterised in that the optoelectronic device includes a light emitting diode (18).

## Patentansprüche

1. Vorrichtung zum Verriegeln eines Filterhalters am Aufgußkopf (1) einer Espresso-Kaffeemaschine, welche mit einer Verriegelungsrampe (2) versehen ist und den Filterhalter (3) dicht aufnehmen kann, der zu diesem Zweck Elemente (4) zur Befestigung am Aufgußkopf (1) aufweist, so daß der Filterhalter (3) in den Kopf eingeführt und durch eine Drehbewegung von einer freien in eine verriegelte Stellung gebracht werden kann, **dadurch gekennzeichnet, daß** er eine Signalvorrichtung aufweist, die es ermöglich, beim Übergang des Filterhalters (3) aus der freien in die verriegelte Stellung den genauen Moment anzuzeigen, an dem der Filterhalter (3) seine verriegelte Stellung erreicht, so daß eine richtige Verriegelung desselben erreicht wird.

2. Verriegelungsvorrichtung nach Anspruch 1, **dadurch gekennzeichnet, daß** die Signalvorrichtung akustischer Art ist.

3. Verriegelungsvorrichtung nach Anspruch 2, **dadurch gekennzeichnet, daß** die akustische Signalvorrichtung aus einer flexiblen Lamelle (9) und einem Buckel (10) besteht, welcher mit der Lamelle (9) zusammenwirkt, indem er die Lamelle (9) biegt und sie plötzlich zurückschnellen läßt, wenn der Filterhalter (3) seine verriegelte Stellung erreicht.

4. Verriegelungsvorrichtung nach Anspruch 3, **dadurch gekennzeichnet, daß** die flexible Lamelle (9) fest am Filterhalter (3) gehalten ist und daß der Buckel (10) am Ausgußkopf (1) ausgebildet ist.

5. Verriegelungsvorrichtung nach Anspruch 3, **dadurch gekennzeichnet, daß** die flexible Lamelle (9) fest am Ausgußkopf (1) gehalten ist und daß der Buckel (10) am Filterhalter (3) ausgebildet ist.

6. Verriegelungsvorrichtung nach einem der Ansprüche 3 bis 5, **dadurch gekennzeichnet, daß** die flexible Lamelle (9) eine Lamelle aus Polyester ist.

7. Verriegelungsvorrichtung nach Anspruch 2, **dadurch gekennzeichnet, daß** die Signalvorrichtung einen Schalter (15) aufweist, der mit dem Filterhalter (3) zusammenwirkt und der den Betrieb einer elektroakustischen Vorrichtung (16,17) steuert.

8. Verriegelungsvorrichtung nach Anspruch 1, **dadurch gekennzeichnet, daß** die Signalvorrichtung optischer Art ist.

9. Verriegelungsvorrichtung nach Anspruch 8, **dadurch gekennzeichnet, daß** die Signalvorrichtung einen Schalter (15) aufweist, der mit dem Filterhalter (3) zusammenwirkt und der anzeige (16, 18) steuert.

10. Verriegelungsvorrichtung nach Anspruch 9, **dadurch gekennzeichnet, daß** die photoelektronische Vorrichtung eine LED-Diode (18) aufweist.
